# EUROPEAN PATENT SPECIFICATION

(11) **EP 2 485 904 B1**
(45) Date of publication and mention of the grant of the patent: **03.05.2017**
(21) Application number: 09744024.2
(22) Date of filing: 07.10.2009
(51) Int. Cl.: B60C 11/117

(54) **MOTORCYCLE TYRES**
MOTORRADREIFEN
PNEUMATIQUES DE MOTOCYCLETTE

(43) Date of publication of application: 15.08.2012
(73) Proprietor: Pirelli Tyre S.p.A., 20126 Milano (IT)
(72) Inventor: MENDES, Rodrigo, Telino, 02273-090 São Paulo-SP (BR)
(74) Representative: Fiammenghi, Eva
(86) International application number: PCT/BR2009/000311
(87) International publication number: WO 2011/041859

(56) References cited:
- EP-A1- 1 473 176
- EP-A1- 2 181 864
- WO-A1-2009/013961
- WO-A1-2010/041283
- JP-A- 3 135 802
- JP-A- 11 291 715
- US-A1- 2005 098 250

## Description

The present invention relates to a motorcycle tyre, i.e. a tyre having a high transversal curvature so as to offer an adequate contact surface with the road surface when the motorcycle is leaning to turn a bend.

Tyres for wheels of motorcycles must ensure a high versatility of use both when driving in a straight line and cornering. In particular, the tyres should always ensure high traction and grip on the road surface, in order to allow an optimal transfer of power and an adequate braking action, also with a load of two people and on any type of road surface (wet, dry, regular and/or irregular asphalt, etc.) and/or route (city streets, motorways, mountain roads with a large number of bends, etc.).

Such tyres must also ensure comfort, driving stability, controllability, directionality, road-holding, high mileage and regular wear.

The behaviour of the tyres during travel is greatly influenced by the number, orientation, distribution and shape of the grooves formed on the tread band, and thus by the particular pattern of such a tread band.

The aforementioned grooves for example promote the grip of the tyre on the road surface and the draining of water in case of a wet road surface. However, such grooves tend to weaken the structure of the tread band, making it more subject to wear. They can also generate noise and vibrations.

EP 0 906 836 A2 describes a tyre for a two-wheeled vehicle comprising a ground contacting tread having at least one tread groove formed therein and extending axially from the tread centre to the tread edge, characterised in that a first region of the tyre tread, which is the central tread region and is the region of contact between the tyre and the ground when the motorcycle is in the condition of moving in a straight line, the alignment of the tread groove is substantially circumferential, and in a second region of the tyre tread, which is at the axial edge of the tread and is the region of contact when the motorcycle is in the condition of turning under maximum cornering, the alignment of the tread grooves is substantially transverse, and in a third region, which is the tread region between the first central region and the second axial region, and which is the ground contacting region when the motorcycle is turning at less than the maximum cornering condition, the groove alignment changes progressively axially outwardly from substantially circumferential to substantially transverse so that in the first, second and third axial regions of the tyre tread the tread grooves are substantially aligned with the resultant forces acting on the tyre tread surface in the contact region between the tread and with the ground.

EP 1 826 026 A1 describes a pneumatic tire for a motorcycle, having a tread portion provided with at least a pair of circumferential grooves extending generally in a circumferential direction of the tire and oppositely disposed with respect to an equatorial plane of the tire and a plurality of inclined grooves extending from an outer side to an inner side in a width direction on a grounding surface of the tread portion to be inclined with respect to the circumferential direction of the tire and ended within the grounding surface of the tread portion. The circumferential grooves are disposed in the side areas when the tread portion is divided into a central area and two side areas located at both sides on the central area. The inclined grooves slanting in mutually opposite directions with respect to the circumferential direction of the tire are alternatively arranged along the circumferential direction of the tire. At least some of the inclined grooves extend across the equatorial plane of the tire. In some embodiments, EP 1 826 026 A1, inclined grooves extending across the equatorial plane of the tire and inclined grooves not extending across the equatorial plane of the tire are alternatively arranged. Further known motorcycle tyres include those described in JP 3 135802 A and in JP 11 291715 A. The Applicant has tackled the problem of providing motorcycle tyres ensuring high mileage and regular wear, and providing the biker with driving stability, controllability, road-holding, and, particularly, safety feeling when leaning on bends on wet paves.

The Applicant has found that the provision, on a motorcycle tyre, of a tread pattern having first grooves extending substantially along the whole tread band portion comprised between the equatorial plane and the shoulder portion of the tyre, and of additional grooves located in a lateral portion of the tread band, corresponding to intermediate-high camber angles, wherein the additional grooves comprise groove portions extending according to a direction forming an angle of low value (preferably lower than or equal to 40°) with the equatorial plane of the tyre, allows obtaining a tyre having a greatly improved drainage of water when running on wet surfaces (even with deep water layers), essentially in all travel conditions.

In particular, it has been found that such tyre performs particularly well during leaning on bends on wet paves.

It has also been found that advantageously such tread pattern can be effectively used either for tyres adapted for fitting on the front or on the rear wheel of a motorcycle.

The present invention thus relates to a motorcycle tyre comprising a tread band.

By "motorcycle tyre" it is meant a tyre having a high curvature ratio (typically greater than or equal to 0.200), capable of reaching high camber angles when the motorcycle leans on a bend. By "curvature ratio" of the motorcycle tyre it is meant the ratio of the distance between the radially highest point of the tread band and the maximum chord of the tyre, to the maximum tyre chord itself, in a cross section of the tyre.

In preferred aspects thereof, the invention has one or more of the following preferred features.

The tread band comprises a central region and two lateral regions. The central region extends astride the equatorial plane of the tyre, whereas the lateral regions extend laterally to the central region. For example, the central region of the tread band may extend over a width smaller than or equal to 40% of the lateral extension of the tread band.

A tread pattern is formed on the tread band.

The tread pattern comprises a plurality of first transverse grooves extending from said central region to said lateral regions. The inclination of the first transverse grooves in said central region is lower than or equal to 40°, more preferably lower than or equal to 35°. The inclination of said first transverse grooves in said lateral regions is greater than 40°, more preferably greater than 45°.

The tread pattern further comprises a plurality of second transverse grooves extending within said lateral regions. Each of said second transverse grooves comprises at least a first portion having an inclination greater than 40°, more preferably greater than 50°. At least a second portion of said second transverse groove has an inclination lower than or equal to 40°, more preferably lower than or equal to 35°. At least a third portion having an inclination greater than 40°, more preferably greater than 50°, may be also provided.

The first transverse grooves may extend substantially from the center to the shoulder of the tyre (possibly up to an axially outermost portion of the tread band being devoid of any groove, according to preferred embodiments), and work substantially as main drainage elements. The portion of the first transverse grooves comprised in the central portion of the tyre has a more longitudinal inclination, and is particularly effective in collecting water to be discharged out of the contact patch during running on straight lines. The portion of the first transverse grooves comprised in the lateral portions of the tyre has a substantially transverse inclination, so as to effectively discharge the collected water out of the contact patch.

The second transverse grooves extend within the lateral portions of the tyre, and increase the void to rubber ratio in such tyre portions, especially in an intermediate axial portion of the tread band. More particularly, the configuration of the second transverse grooves, comprising the more longitudinal second portion, has been found to be very effective in keeping stability and roadholding during leaning in bends in case of presence of even deep water layers.

It is preferred that the tread pattern does not comprise grooves extending only, or substantially only, according to a substantially longitudinal direction. By "substantially longitudinal direction", it is meant a direction having an inclination of at most few degrees versus the equatorial plane of the tyre (e.g., of less than 5°). For the sake of clarification, by the above expression it is not excluded that in preferred embodiments of the invention at least some of the grooves forming the tread pattern may have some portions extending according to a substantially longitudinal direction. However, it is preferred that the tread pattern does not comprise long grooves (e.g. grooves or groove portions having a length of at least half of a pitch of the tread pattern) extending according to a substantially longitudinal direction.

An end of first transverse grooves is advantageously located close to the equatorial plane of the tyre. This may improve the starting of the draining of water during running on a straight line, without substantially affecting the running stability perceived by the driver, especially on the front of the motorcycle.

Advantageosuly, the first transverse grooves may comprise a first portion proximal to the equatorial plane of the tyre and a second portion distal from the equatorial plane of the tyre located in said central region of the tread band, wherein the first portion has a greater inclination than the second portion. It has been found that such configuration improves stability during braking and traction during acceleration in straight running. Moreover, it has also been found that such configuration improves water draining on wet surfaces at the beginning of a bend, when the motorcycle is moderately cambered.

Advantageously, the first transverse grooves may comprise a third portion proximal to the equatorial plane of the tyre and a fourth portion distal from the equatorial plane of the tyre located in the lateral regions of the tread band, wherein said third portion has a greater inclination than said fourth portion. It has been found that the more transversal third portion of the first grooves improves the promptness of the tyre when applying a torque (either acceleration or braking) during leaning on a bend. It has also been found that the less transversal fourth portion improves the discharge of the water from the contact patch during leaning on a bend on wet surfaces.

Advantageously, the first transverse grooves may have a greater depth in the central region than a depth in the lateral regions of the tread band. It has been found that by keeping a lower depth in the shoulder region the draining effectiveness can be maintained, at the same time maintaining the stiffness of the lateral portions of the tyre, and particularly of the portions located close to the shoulders, which have to sustain both longitudinal and lateral forces during leaning on bends at high camber angle. This limits irregular wear and/or driving instability phenomena.

In preferred embodiments, the depth variation in the first transverse grooves between the central portion of the tyre and the lateral portions of the tyre is kept lower than 50%, more preferably lower than 40%. For tyres adapted to be fitted on a front wheel of a motorcycle, it may be of advantage to keep the depth variation to at most 20%.

Advantageously, the first transverse grooves may have a greater width in the lateral regions than a width in the central region. This improves water draining.

In preferred embodiments, the width variation in the first transverse grooves between the central portion of the tyre and the lateral portions of the tyre can be comprised within 50% and 200%.

Moreover, together with the above mentioned decreasing of the groove depth from the central portion to the lateral portions, such feature may advantageously provide an increase of the cross-section of the first transverse grooves, so as to maintain, at the same time, water draining effectiveness and stiffness of the shoulder portions of the tyre. Such increase could arrive also at 100-120% in some embodiments. In preferred embodiments, a cross-section increase of the first transverse grooves can be comprised within 30% and 100%.

In the second transverse grooves, the above mentioned first and third portions thereof may have different inclinations versus the equatorial plane of the tyre. In particular, the first and third portions of the second transverse grooves can be disposed so as to diverge (i.e. so as to increase their mutual distance) going towards the axially outer portion of the tyre. It has been found that this improves water discharge out of the contact patch during leaning on bends at high camber angle.

Advantageously, the first, second and third portions of said second transverse grooves cross with each other so as to form at least one vertex, or even to form a cusp (i.e. the groove portions meet with each other with no further groove extension from the meeting "point" and enclose an angle lower than 90°). It has been found that such configuration greatly improves roadholding and stability during leaning on bends at high camber angle on wet surfaces. The Applicant believes that the formation of a vertex or of a cusp in the crossing "point" between a more transverse groove portion and a more longitudinal groove portion allows the breaking of the water surface film during leaning on bends, with a better penetration and opening of the water layer. It is noticed that the terms "vertex", "cusp" and/or "point" referred to the meeting of the second transverse groove portions are to be referred to a same reference line belonging to the groove portions, e.g. the bottom line of the groove portions or the radially outer sides of the groove portions.

In preferred embodiments, said at least one vertex or said at least one cusp is located so as to face the equatorial plane of the tyre.

In preferred embodiments, the second transverse grooves are substantially "U"-shaped.

At least one among the above mentioned first and third portion of the second transverse grooves may have an inclination greater than 90°. This has been found particularly advantageous in case of a tyre to be fitted to a front wheel of a motorcycle.

The above mentioned second, more longitudinal portion of the second transverse grooves may form with at least one of said first or said third portion of said second transverse grooves an angle lower than or equal to 90°. This determines a sort of "wedge-shaping" of the second transverse grooves, which the Applicant believes to be very helpful for breaking the water film during leaning on bends at high camber angle on wet surfaces. In particular, such "wedge-shaping" appears to be particularly effective when the second, more longitudinal portion of the second transverse grooves forms with at least one of said first or said third portion of said second transverse grooves an angle comprised between 60° and 90°.

Further features and advantages of the tyre of the present invention shall become clearer from the following detailed description of some exemplary embodiments thereof, made with reference to the attached drawings given just as non-limiting examples. In such drawings:
- figure 1 shows a radial section view of a tyre according to the invention;
- figure 2 shows a portion of an exemplary tread pattern usable on a tread band of a tyre according to the present invention;
- figure 3 shows a portion of another exemplary tread pattern usable on a tread band of a tyre according to the present invention;
- figure 4 shows a trend of the void to rubber ratio for the tread pattern shown in figure 2;
- figure 5 shows a trend of the void to rubber ratio for the read pattern shown in figure 3;
- figure 6a-b-c schematically show the transition of the contact patch on a tyre carrying the tread pattern of figure 2, in different travel situations (straight line, camber 15°, camber 30° respectively);
- figure 7a-b-c schematically show the transition of the contact patch on a tyre carrying the tread pattern of figure 3, in different travel situations (straight line, camber 15°, camber 30° respectively);
- figure 8 compares glass floor views taken in tests performed with an exemplary tyre of the invention (left) and with a known tyre sold by the Applicant (right).

For the purposes of the present description, by "tread pattern" it is intended the representation of all the points of the tread band (inclusive of the grooves) in a plane perpendicular to the equatorial plane of the tyre and tangent to the maximum diameter of the tyre. In the representation:
- in lateral direction the distance of each point of the tread band from the equatorial plane corresponds to the distance of this point from the equatorial plane measured on the lateral extension of the band itself;
- in circumferential direction the distance between any two points of the tread band corresponds to the distance between the projections of the two points on the circumference corresponding to the maximum diameter of the tyre, which projection is carried out by means of radial planes passing through the two points.

The measurements of angles, and/or linear quantities (distances, widths, lengths, etc.) and/or surfaces are to be intended as referred to the tread pattern as above defined.

In addition, for the purposes of the present description, the following definitions apply:
- By "camber angle" it is intended the angle formed between the equatorial plane of the tyre fitted on the motorcycle's wheel and a plane orthogonal to the running surface.
- By "equatorial plane" of the tyre it is intended a plane perpendicular to the rotation axis of the tyre and dividing the tyre into two symmetrically identical parts.

- By "inclination" of a groove or of a groove portion it is intended an inclination versus the equatorial plane of the tyre.
- By "circumferential" or "longitudinal" direction it is intended a direction generally oriented in the rotation direction of the tyre or in any case of little inclination relative to the rotation direction of the tyre (e.g. up to 5°).
- By "transverse" direction it is intended a direction with a substantial inclination relative to the rotation direction of the tyre.
- By "void to rubber ratio" it is intended the ratio between the overall surface of the empty spaces (typically formed by grooves) of a given portion of the tyre tread pattern (possibly of the whole tread pattern) and the overall surface of the same given portion of the tread pattern (possibly of the whole tread pattern).
- By "lateral extension" of the tread band it is intended the length of the arc defining the radially outermost profile of the tread band in a cross section of the tyre.

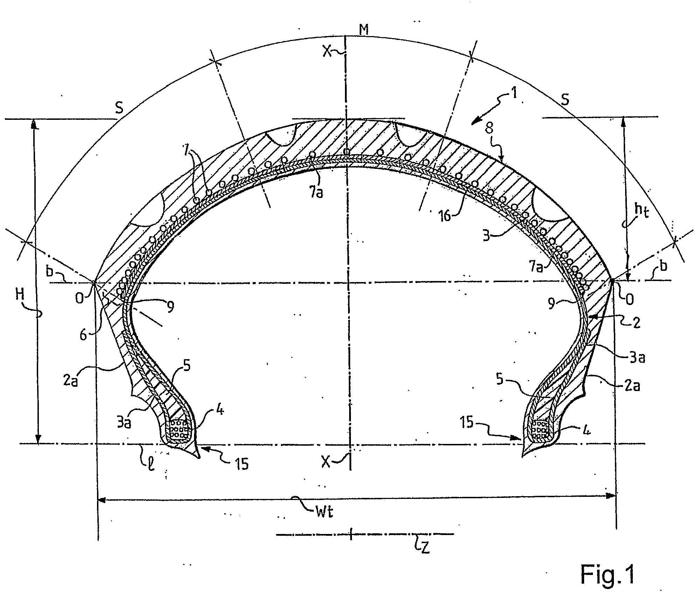

In figure 1, a tyre for wheels of motor vehicles according to the present invention is wholly indicated with 1.

In the tyre 1 an equatorial plane X-X and a rotation axis Z are defined.

The tyre 1 comprises a carcass structure 2 having a central crown portion 16 including at least one carcass ply 3, described later on in greater detail.

The carcass structure 2 is preferably coated on the inner walls thereof with a so-called "liner", essentially consisting of a layer of airtight elastomeric material, suitable for ensuring the hermetic seal of the tyre itself once inflated.

The carcass ply 3 is engaged, at the axially opposite side edges 3 a, with respective annular reinforcing structures 4 intended to hold the tyre on a corresponding mounting rim. The annular reinforcing structures 4 are typically known as "bead cores".

On the outer perimeter edge of the bead cores 4 a tapered elastomeric filler 5 is applied that occupies the space defined between the carcass plies 3 and the corresponding turned up side edge 3 a of the carcass plies 3.

In an alternative embodiment, not illustrated, the carcass ply has the opposite side edges thereof associated, without turning up, with special annular reinforcing structures provided with at least two metallic annular inserts.

As known, the area of the tyre comprising the bead core 4 and the filler 5 forms the so-called "bead", globally indicated in figure 1 with 15, intended to fix the tyre on a corresponding mounting rim, not shown.

In a radially outer position with respect to the aforementioned carcass structure a belt structure 6 is provided, also described in greater detail later on.

In a radially outer position with respect to the belt structure a tread band 8 is provided, through which the tyre 1 makes contact with the ground.

The tyre can also comprise a pair of sidewalls 2a applied to the side of the carcass structure 2 on axially opposite sides of the equatorial plane X-X. When present, the sidewalls extend from the tread band 8 to the region corresponding to the bead 15 of the tyre 1.

The tyre 1 of the present invention is characterised by a high transverse curvature and lowered sidewalls.

The transverse curvature of a tyre is defined by the particular value of the ratio between the distance ht (figure 1) of the top of the tread band from the line b-b passing through the ends O of the tread band 8, measured on the equatorial plane X-X, and the distance wt between said ends of the tread band. Should the ends of the tread band not be easily identifiable, for example due to the lack of a precise reference like for example the edge indicated in figure 1 with O, the distance wt can certainly be assumed to correspond to the measurement of the maximum chord of the tyre.

The tyre 1 of the present invention preferably has a curvature ratio greater than or equal to 0.2, preferably greater than or equal to 0.25. Such a curvature ratio is typically smaller than or equal to 0.8, preferably smaller than or equal to 0.5. Typically, a tyre being adapted for fitting on a front wheel of a motorcycle has a greater curvature ratio than a tyre being adapted for fitting on a rear wheel of the motorcycle.

As regards the sidewalls, on the other hand, the tyre of the present invention is preferably a tyre with particularly low sidewalls (fig. 1). By tyres with low sidewalls in the present description we mean tyres wherein the ratio between the height H, measured on the equatorial plane X-X between the top of the tread band and the fitting diameter, defined by the reference line 1 passing through the beads of the tyre, and the distance ht, is smaller than 0.7, more preferably smaller than 0.5.

The carcass ply 3 is preferably made from elastomeric material and comprises a plurality of reinforcing elements (not shown) arranged parallel to one another and substantially perpendicular to the equatorial plane X-X.

The reinforcing elements included in the carcass plies 3 preferably comprise textile cords selected from those usually adopted in the manufacture of carcasses for tyres, for example nylon, aramide, rayon, PET, PEN etc.. The elementary textile yarns may have a diameter ranging between 0.35 mm and 1.5 mm.

The belt structure 6 preferably comprises rubberized cords 7, arranged substantially parallel and side-by-side in the axial direction on the crown portion 16 of the carcass structure 2, to form a plurality of coils 7a. Such coils are substantially oriented according to the rolling direction of the tyre (typically with an angle of between 0° and 5°), such a direction usually being known as "at zero degrees" with reference to how it lies with respect to the equatorial plane X-X of the tyre. The aforementioned coils preferably extend over the entire crown portion 16 of the carcass structure 2.

Preferably, the belt structure 6 comprises windings of a single cord 7, or of a tape of rubberized fabric comprising a number of cords arranged side-by-side, preferably up to five, wound in a spiral from one end to the other on the crown portion 16 of the carcass structure 2.

Preferably, such cords 7 are made through steel wires with high carbon content (HT), in other words steel wires with a carbon content of at least 0.7%-0.8%.

Preferably, the belt structure 6 further comprises a support layer 9 of elastomeric material arranged between the layer of cords 7 and the carcass ply 3 and on which the coils 7a are wound. The layer 9 preferably extends on a surface having an axial extension substantially corresponding to the surface on which the coils 7a extend.

In a preferred embodiment of the tyre 1 of the present invention, the layer 9 comprises short aramid fibres, for example Kevlar® fibres, dispersed in the elastomeric material.

In a further embodiment that has not been illustrated, an additional layer of elastomeric material is arranged between the belt structure 6 and the tread band 8. Such a layer preferably extends over a surface corresponding to the surface of extension of the belt structure 6.

Alternatively or in combination to the presence of the cords 7, in a configuration not shown in figure 1, the belt structure can comprise at least two radially overlying layers, each consisting of elastomeric material reinforced with cords arranged parallel to one another. The layers are arranged so that the cords of the first belt layer are oriented obliquely with respect to the equatorial plane of the tyre, whereas the cords of the second layer also have an oblique orientation, but substantially symmetrically crossed with respect to the cords of the first layer, to form the so-called "cross-belt".

In this case, generally, the cords of the belt structure 6 are generally textile cords, for example textile cords made from synthetic fibre, for example nylon, rayon, PEN, PET, preferably synthetic fibre with high modulus, in particular synthetic aramid fibre (for example Kevlar® fibres). Alternatively, hybrid cords can be used comprising at least one wire with low modulus, in other words with a modulus not greater than 15000 N/mm² (for example nylon or rayon), interwoven with at least one wire with high modulus (for example Kevlar®), in other words with a modulus not smaller than 25000 N/mm².

In a further configuration not illustrated in figure 1, the tyre comprises a carcass structure having at least two superimposed carcass plies. The at least two carcass plies are made from elastomeric material and comprise a plurality of reinforcing elements (typically textile cords among those cited above) arranged so that the elements of a first carcass ply are oriented obliquely with respect to the equatorial plane of the tyre, whereas the cords of a second superimposed carcass ply also have an oblique orientation, but substantially symmetrically crossed with respect to the cords of the first carcass ply, in a crossed configuration. At least one of the carcass plies is associated with the bead cores in the bead region of the tyre (e.g. by a carcass turn-up).

The tread band 8 has a tread pattern defined by a plurality of grooves variously distributed in the different areas of the tyre.

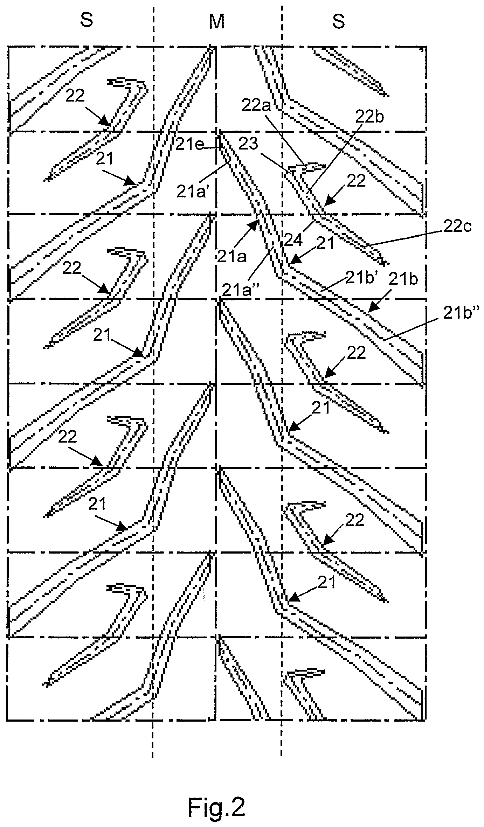

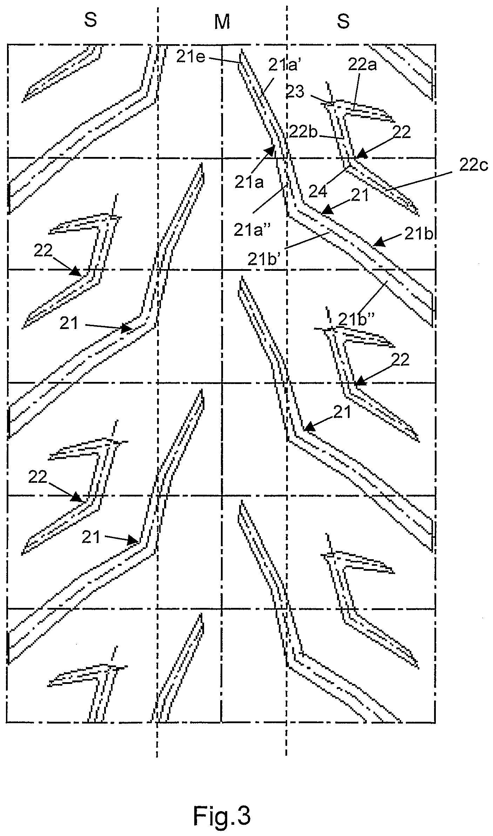

As better illustrated in figure 2 and/or 3, in the tread band 8 it is possible to identify an annular central region M arranged astride of the equatorial plane X-X and two axially outer annular lateral regions S, arranged on axially opposite sides with respect to the annular central region M.

The annular central region M is defined in a central area of the tread band 8 intended to come into contact with the road surface when the motor vehicle travels in a straight line or slightly leaning, whereas the lateral region S are mainly defined in shoulder areas S of the tread band 8, i.e. in those areas intended to come into contact with the road surface when the motorcycle turns a bend leaning to a greater extent.

The annular central region M extends astride of the equatorial plane X-X for an axial extension lower than or equal to 40% of the axial extension of the tread band 8, for example equal to about 35%.

The pattern of the tread band 8 of the tyre of the present invention is defined by a plurality of grooves variously distributed along the circumferential and axial extension of the tread band 8.

Such grooves define a pattern that is replicated substantially with a certain pitch along the circumferential direction of the tyre 1.

Figure 2 and figure 3 show portions of exemplary tread patterns of the tyre 1 of the present invention. The tread patterns of figures 2 and 3 do not comprise grooves extending only according to a substantially longitudinal direction. The grooves forming the tread patterns shown in figures 2 and figure 3 are mainly transverse.

In more detail, figure 2 shows a portion of a tread pattern usable on a tyre adapted for fitting on a front wheel of a motorcycle, whereas figure 3 shows a portion of a tread pattern usable on a tyre adapted for fitting on a rear wheel of a motorcycle. A preferred rotation direction of motorcycle tyres carrying tread patterns according to the embodiments shown in figures 2 and 3 goes from the bottom to the top of the figures.

The same reference numbers in figure 2 and figure 3 identify similar or corresponding elements in both tread patterns.

With reference to figure 2 and 3, the tread pattern comprises a plurality of first transverse grooves 21 extending from said central region M to said lateral regions S. The first transverse grooves 21 are disposed in the tread pattern so as to alternate on opposite sides of the equatorial plane X-X of the tyre in circumferential direction.

The inclination of the first transverse grooves in the portion 21 a included in the central region M is preferably lower than or equal to 40°, more preferably lower than or equal to 35°.

The inclination of the first transverse grooves 21 in the portions 21b included in the lateral regions S is preferably greater than 40°, more preferably greater than 45°.

The first transverse grooves 21 may extend substantially from the center of the tread band to the shoulder of the tread band. Possibly, an axially outermost portion of the tread band can be left free of any groove, so as to leave a solid elastomeric annular element on the outermost portion of the tread band, with high stiffness. This greatly improves roadholding during leaning at very high camber and at high speed on dry paves.

The first transverse grooves 21 work substantially as main drainage elements of the tread patterns. The portion 21a of the first transverse grooves 21 comprised in the central region M of the tyre has a more longitudinal inclination, and is particularly effective in collecting water to be discharged out of the contact patch during running on straight lines. The portion 21b of the first transverse grooves 21 comprised in the lateral regions S of the tyre has a substantially transverse inclination, so as to effectively discharge the collected water out of the contact patch.

A first end 21e of the first transverse grooves 21 is advantageously located close to the equatorial plane X-X of the tyre. In preferred embodiments, the end 21e is close but does not cross the equatorial plane X-X of the tyre. Preferably, the first end 21e of the first transverse grooves 21 may lie within a region having a width of 10%-15% of the lateral extension of the tread band.

In the embodiments shown in figure 2 and figure 3, the portions 21a of the first transverse grooves 21 located in the central region M comprise a first sub-portion 21a' proximal to the equatorial plane X-X of the tyre and a second sub-portion 21a" distal from the equatorial plane X-X of the tyre.

The first sub-portion 21a' has a greater inclination versus the equatorial plane of the tyre X-X than the second portion 21a". The inclination difference between the two sub-portions 21a' and 21a" can preferably be comprised in a range between 5° and 20°.

For example, the first sub-portion 21 a' may have an inclination ranging within 20°-35°, and the second sub-portion 21a" may have an inclination ranging within 10°-20°.

It has been found that such configuration improves stability during braking in straight running. Moreover, it has also been found that such configuration improves water draining on wet surfaces at the beginning of a bend, when the motorcycle is moderately cambered.

Moreover, in the embodiments shown in figure 2 and figure 3, the portions 21b of the first transverse grooves 21 located in the lateral regions S comprise a third sub-portion 21b' proximal to the equatorial plane X-X of the tyre and a fourth sub-portion 21b" distal from the equatorial plane X-X of the tyre.

The third sub-portion 21b' has a greater inclination versus the equatorial plane of the tyre X-X than the fourth sub-portion 21b". The inclination difference between the two sub-portions 21b' and 21b" can preferably be comprised in a range between 5° and 15°.

For example, the third sub-portion 21b' may have an inclination ranging within 55°-65°, and the fourth sub-portion 21b" may have an inclination ranging within 45°-55°. It has been found that the more transversal third su-portion of the first grooves improves the promptness of the tyre when applying a torque (either acceleration or braking) during leaning on a bend. It has also been found that the less transversal fourth sub-portion improves the discharge of the water from the contact patch during leaning on a bend on wet surfaces.

Advantageously, the first transverse grooves 21 may have a greater depth in the central region M of the tread band than a depth in the lateral regions S of the tread band.

In preferred embodiments, the depth variation in the first transverse grooves 21 between the central portion M of the tyre and the lateral portions S of the tyre is kept lower than 50%, more preferably lower than 40%. For tyres adapted to be fitted on a front wheel of a motorcycle, it may be of advantage to keep the depth variation to at most 20%. For example, in figure 2 the depth of the first transverse grooves 21 in the central region M of the tread band may be of about 4.8 mm, and the depth of the first transverse grooves 21 in the lateral regions S of the tread band may be of about 4.3 mm. For example, in figure 3 the depth of the first transverse grooves 21 in the central region M of the tread band may be of about 6.5 mm, and the depth of the first transverse grooves 21 in the lateral regions S of the tread band may be of about 4.1 mm.

Advantageously, the first transverse grooves 21 may have a greater width in the lateral regions S of the tread band than a width in the central region M of the tread band.

In preferred embodiments, the width variation in the first transverse grooves 21 between the central portion M of the tyre and the lateral portions S of the tyre can be comprised within 50% and 200%. For example, the width of the first transverse grooves 21 may increase starting from about 4 mm close to the equatorial plane X-X of the tyre to about 9 mm close to the shoulder portion of the tyre.

Moreover, together with the above mentioned decreasing of the groove depth from the central portion to the lateral portions, such feature may advantageously provide an increase of the cross-section of the first transverse grooves, so as to maintain, at the same time, water draining effectiveness and stiffness of the shoulder portions of the tyre. This may be of a great advantage when leaning on a bend. The increase in cross section could arrive also at 100-120% in some embodiments. In preferred embodiments, the cross-section increase of the first transverse grooves can be comprised within 30% and 100%.

The first transverse grooves 21 can preferably have an asymmetrical cross section. In other words, the walls of the first transverse grooves 21 could have different inclinations with respect to a direction generally perpendicular to the bottom of the grooves. In particular, by arranging the axially outer wall of the first transverse grooves 21 with a lower inclination with respect to the axially inner wall, a better support feeling during leaning on bends has been observed.

As already mentioned, the tread pattern further comprises a plurality of second transverse grooves 22 extending within the lateral regions S of the tread band. The second transverse grooves do not extend within the central region M of the tread band.

The second transverse grooves 22 are disposed in the tread pattern so as to alternate on opposite sides of the equatorial plane X-X of the tyre in circumferential direction. Moreover, the second transverse grooves 22 alternate with the first transverse grooves 21 in the circumferential direction of the tyre. In the embodiments shown in figure 2 and 3, one second transverse groove 22 is sandwiched between two first transverse grooves 21 (or vice versa).

As shown in the embodiments of figures 2 and 3, the second tranverse grooves 22 are the composition of a plurality of portions. In preferred embodiments, the second transverse grooves are substantially "U"-shaped.

In particular, in the embodiments shown in figures 2 and 3 each of the second transverse grooves 22 comprises at least a first portion 22a having an inclination greater than 40°, more preferably greater than 50°. At least a second portion 22b of said second transverse groove has an inclination lower than or equal to 40°, more preferably lower than or equal to 35°. A third portion 22c of the second transverse groove has an inclination greater than 40°, more preferably greater than 50°.

For example, the inclination versus the equatorial plane X-X of the tyre of the first portion 22a can range between 70° and 110°; the inclination versus the equatorial plane X-X of the tyre of the third portion 22c can range between 50° and 70°; the inclination versus the equatorial plane X-X of the tyre of the second portion 22b can range between 10° and 35°.

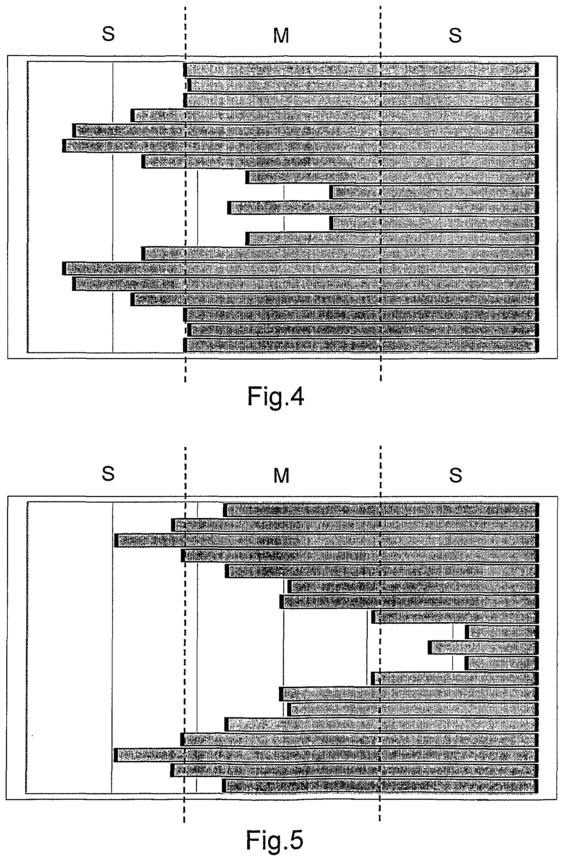

The second transverse grooves 22 extend within the lateral portions S of the tyre, and increase the void to rubber ratio in such tyre portions, especially in an intermediate axial portion of the tread band. Figures 4 and 5 respectively schematically show exemplary trends of the void to rubber ratio for the tread patterns shown in figures 2 and 3. As it can be seen, the average void to rubber ratio is the highest in an intermediate portion of the lateral regions S of the tread band, whereas it is minimum in the central region M of the tread band. It has been observed that the lower void to rubber ratio close to the equatorial plane X-X of the tyre provides an improved mileage of the tyre. Moreover, it has been observed that the progressive increase of the void to rubber ratio going towards the shoulder portions of the tread band provides a better support feeling during leaning on bends and an effective ourflow of water from the contact patch when travelling on wet surfaces. In order to keep stiffness of the tyre during leaning on a bend, tt may be convenient to lower the void to rubber ratio close the shoulder: in the embodiments shown in figures 4-5, the void to rubber ratio slightly decreases at the shoulders, still remaining higher than the void to rubber ratio in the central region M of the tread band.

In the second transverse grooves 22, the above mentioned first portion 22a and third portion 22c may have different inclinations versus the equatorial plane X-X of the tyre. As shown in figures 2 and 3, the first portion 22a and the third portion 22c of the second transverse grooves 22 can be disposed so as to diverge (i.e. so as to increase their mutual distance) going towards the axially outer portion of the tyre.

In the embodiments, shown if figures 2-3, the first, second and third portions 22a, 22b, 22c of the second transverse grooves 22 cross with each other so as to form vertexes 23, 24 located within the lateral regions S, in respective intermediate portions thereof. A cusp 23 can be advantageously formed, i.e. the groove portions 22a or 22b and the groove portion 22c meet with each other with no further groove extension from the meeting "point" and enclose an angle lower than 90°. In the embodiments shown in figures 2-3, a cusp 23 is formed between the first portion 22a and the second portion 22b of the second transverse grooves 22. This determines a sort of "wedge-shaping" of the second transverse grooves 22. The Applicant believes that such shaping is very helpful for breaking the water surface film during leaning on bends at high camber angle on wet surfaces, with a better penetration and opening of the water layer.

In particular, it was observed that such "wedge-shaping" may be particularly effective when the second portion 22b forms with the first portion 22a (or the third portion 22c) of the second transverse grooves 22 an angle comprised between 50° and 90°. For example, the angle comprised between the portions 22a and 22b in figures 2 and 3 is respectively of 69° and 64°.

In the preferred embodiments shown in figure 2 and 3, the cusp 23 is located so as to face the equatorial plane X-X of the tyre. This still improves the effectiveness of the penetration into the water layer during leaning on a bend on wet surfaces.

In the embodiment of figure 2, the first portion 22a of the second transverse grooves 22 has an inclination greater than 90°. This increases the stiffness in the region of the cusp or vertex 23 and has been found particularly advantageous in case of a tyre to be fitted to a front wheel of a motorcycle.

The second transverse grooves 22 can preferably have an asymmetrical cross section. In other words, the walls of the second transverse grooves 22 could have different inclinations with respect to a direction orthogonal to the bottom of the grooves. In particular, by arranging the axially outer wall of the second transverse grooves 22 with a lower inclination with respect to the axially inner wall, a better support feeling during leaning on bends has been observed.

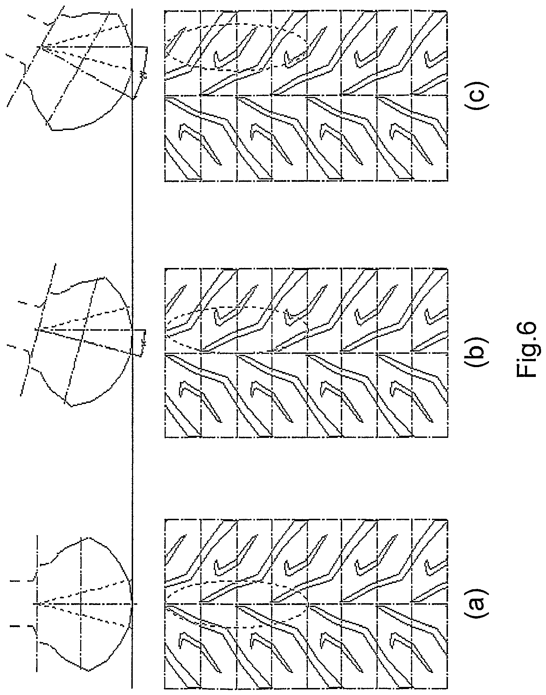

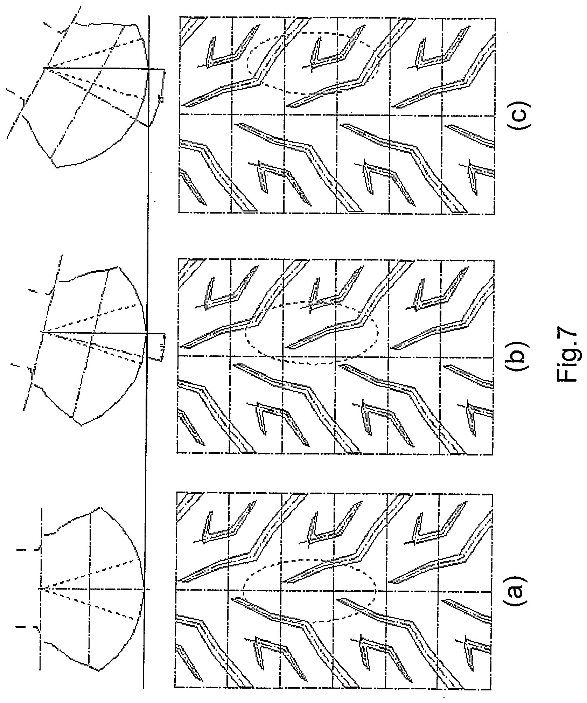

Figures 6a-b-c and figure 7a-b-c schematically show the transition of the contact patch for a tyre carrying the tread pattern of figure 2 and of figure 3, respectively, going from running in straight line (figures 6a-7a), to running in light cornering situation (camber 15°, figures 6b-7b), to running in strong cornering situation (camber 30°, figures 6c-7c).

With reference to figures 6a-7a, during straight line running the contact patch gets a plurality of portions of the first transverse grooves belonging to the central region M of the tyre. In the exemplary embodiments shown, about three of the groove portions are catched inside the contact patch, working together one after the other.

With reference to figures 6b-7b, during running on a "light" bend, the portions of the first transverse grooves begin to work as a support and taking the water from the central region M of the tyre towards the tread band shoulder. Moreover, the wedge-shaped cusp formed in the second transverse grooves is already within the contact patch also, breaking the water surface film and giving lateral support to the biker.

Figures 6c-7c refer to running in what could be called "the critical part" of a bend, when the biker is on a strong inclination, and ready to get back to the original position after doing the bend. This is a very critical situation as all the motorcycle plus biker mass is heavily dislocated from the original gravity point. The tyres are responsible for allowing, even on this critical situation, the keeping of the trajectory, and assure the transition back to the straight line running situation. As it can be seen in figures 6c-7c most of the second transverse groove is within the contact patch, and its more longitudinal portion is working as an important lateral support on this stage of the bend.

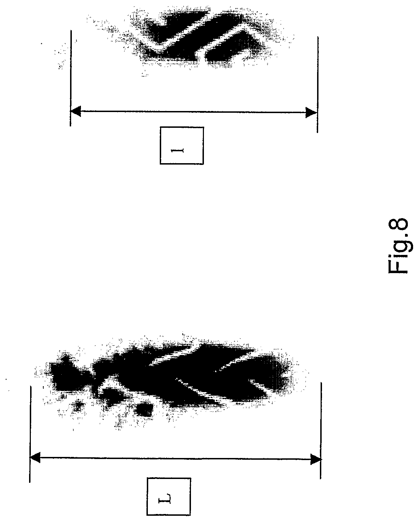

Figure 8 compares glass floor views taken during tests performed with an exemplary tyre of the invention (left) and with a tyre model MT75 sold by the Applicant (right). As it can be seen, while the MT75 has a good drainage, the exemplary tread pattern according to the invention works better in taking away the water from the ground contact area. This can be gained by checking the size of the ground contact area shown in figure 8, i.e by comparing the length 'L' with the length '1'.

Of course, a man skilled in the art can bring further modifications and variants to the invention described above in order to satisfy specific and contingent application requirements, these variants and modifications in any case being covered by the scope of protection as defined by the following claims. For example, while figure 2 and figure 3 disclose tread patterns in which the various portions of the first transverse grooves 21 and of the second transverse grooves 22 meet with each other by forming sharp-cornered portions, the invention comprises also the case in which rounded portions are formed instead.

## Claims

1. A motorcycle tyre (1) comprising a tread band (8) comprising a central region (M) and two lateral regions
(S), said central region (M) extending astride an equatorial plane (X-X) of said tyre, said lateral regions
(S) extending laterally to said central region (M), said tread band (8) further comprising a tread pattern including:
- a plurality of first transverse grooves (21) extending from said central region (M) to said lateral regions (S), wherein an inclination of said first transverse grooves (21) in said central region (M) is lower than or equal to 40° and an inclination of said first transverse grooves (21) in said lateral regions (S) is greater than 40°;
- a plurality of second transverse grooves (22) extending within said lateral regions (S), each of said second transverse grooves (22) comprising at least a first portion (22a) having an inclination greater than 40° and at least a second portion (22b) having an inclination lower than or equal to 40°;
and wherein
- said second transverse grooves (22) are substantially "U"-shaped;
- at least said first portion (22a) and said second portion (22b) of said second transverse grooves (22) cross with each other so as to form at least one vertex (23, 24)
- said at least one vertex (23, 24) faces the equatorial plane of the tyre (X-X);
- said tyre being **characterized in that** the average void to rubber ratio is the highest in an intermediate portion of the lateral regions (S) of the tread band, whereas it is minimum in the central region (M) of the tread band (8).

2. A motorcycle tyre according to claim 1, wherein the central, region (M) extends over a width smaller than or equal to 40% of the lateral extension of the tread band (8).

3. A motorcycle tyre according to claim 1 or claim 2, wherein the tread pattern does not comprise grooves extending only according to a substantially longitudinal direction.

4. A motorcycle tyre according to any one of the previous claims, wherein the inclination of said first transverse grooves (21) in said central region (M) is lower than or equal to 35°.

5. A motorcycle tyre according to any one of the previous
claims, wherein the inclination of said first transverse
grooves (M) in said lateral regions is greater than 45°.

6. A motorcycle tyre according to any one of the previous claims, wherein a first end (21e) of said first transverse grooves (21) is located close to the equatorial plane (X-X)of the tyre.

7. A motorcycle tyre according to any one of the previous claims, wherein said first transverse grooves (21) comprise a first portion (21a') proximal to the equatorial plane of the tyre (X-X) and a second portion (21a") distal from the equatorial plane of the tyre (X-X) in said central region (M) of the tread band (8), and wherein said first portion (21a') has a greater inclination than said second portion (21a").

8. A motorcycle tyre according to any one of the previous claims, wherein said first transverse grooves (21) comprise a third portion (21b') proximal to the equatorial plane of the tyre (X-X) and a fourth portion (21b") distal from the equatorial plane of the tyre (X-X) in said lateral regions (S) of the tread band (8), and wherein said third portion 30 (21b') has a greater inclination than said fourth portion (21b").

9. A motorcycle tyre according to any one of the previous
claims, wherein said first transverse grooves (21) have a depth in said central region (M) which is greater than a depth in said lateral regions (S).

10. A motorcycle tyre according to any one of the previous claims, wherein said first transverse grooves (21) have a width in said lateral regions (S) which is greater than a width in said central region (M).

11. A motorcycle tyre according to any one of the previous claims, wherein each of said second transverse grooves (22) comprises at least a third portion (22c) having an inclination greater than 40°.

12. A motorcycle tyre according to any one of the previous claims, wherein said first portion and/or third portion (22a, 22c) of said second transverse grooves (22) have an inclination greater than 50°.

13. A motorcycle tyre according to claim 11, wherein said first portion (22a) and said third portion (22c) of said second transverse grooves (22) have different inclinations.

14. A motorcycle tyre according to any one of the previous claims, wherein said second portion (22b) of said second
transverse grooves (22) has an inclination lower than or equal to 35°.

15. A motorcycle tyre according to claim 1 or 11, wherein at least one among said first and third portion (22a, 22c) of said second transverse grooves (22) has an inclination
greater than 90°.

16. A motorcycle tyre according to claim 15, wherein said motorcycle tyre is adapted to be fitted to a front wheel of a motorcycle.

17. A motorcycle tyre according to any one of the previous
30 claims, wherein said second portion (22b) of said second transverse grooves (22) forms with said at least a first portion (22a) of said second transverse grooves (22) an angle lower than or equal to 90°.

18. A motorcycle tyre according to claim 17, wherein said second portion (22b) of said second transverse grooves (22) forms with said at least a first portion (22a) of said 5 second transverse grooves (22) an angle greater than or equal to 50°.

## Patentansprüche

1. Motorradreifen (1) umfassend einen Laufflächenring (B) mit einem Zentralbereich (M) und zwei Seitenbereichen (S), wobei der Zentralbereich (M) sich zu beiden Seiten einer Äquatorialebene (X-X) des Reifens erstreckt, wobei die Seitenbereiche (S) sich seitlich zu dem Zentralbereich (M) erstrecken,
wobei der Laufflächenring (8) des Weiteren ein Laufflächenprofil umfasst, das Folgendes umfasst:
- eine Vielzahl von ersten querverlaufenden Nuten (21), die sich von dem Zentralbereich (M) zu den Seitenbereichen (S) erstrecken, wobei eine Schräge der ersten querverlaufenden Nuten (21) in dem Zentralbereich (M) kleiner oder gleich 40° ist, und eine Schräge der ersten querverlaufenden Nuten (21) in den Seitenbereichen (S) größer als 40° ist;
- eine Vielzahl von zweiten querverlaufenden Nuten (22), die sich innerhalb der Seitenbereiche (S) erstrecken, wobei jede der zweiten querverlaufenden Nuten (22) zumindest einen ersten Abschnitt (22a) mit einer Schräge größer als 40° und zumindest einen zweiten Abschnitt (22b) mit einer Schräge kleiner als oder gleich 40° umfasst, und wobei
- die zweiten querverlaufenden Nuten (22) im Wesentlichen "U"-förmig sind;
- zumindest der erste Abschnitt (22a) und der zweite Abschnitt (22b) der zweiten querverlaufenden Nuten (22) einander kreuzen, so dass sie zumindest einen Scheitelpunkt (23, 24) bilden;
- der zumindest eine Scheitelpunkt (23, 24) der Äquatorialebene des Reifens (X-X) zugewandt ist;
- wobei der Reifen **dadurch gekennzeichnet ist, dass** das durchschnittliche Verhältnis von negativen und positiven Profilanteilen in einem mittleren Abschnitt der Seitenbereiche (S) des Laufflächenrings am höchsten ist,
wobei es in dem Zentralbereich (M) des Laufflächenrings (8) am kleinsten ist.

2. Motorradreifen nach Anspruch 1, wobei der Zentralbereich (M) sich über eine Breite kleiner als oder gleich 40 % der seitlichen Erstreckung des Laufflächenrings (8) erstreckt.

3. Motorradreifen nach Anspruch 1 oder Anspruch 2, wobei das Laufflächenprofil keine Nuten umfasst, die sich nur in Übereinstimmung mit einer im Wesentlichen längsverlaufenden Richtung erstrecken.

4. Motorradreifen nach einem der vorhergehenden Ansprüche, wobei die Schräge der ersten querverlaufenden Nuten (21) in dem Zentralbereich (M) kleiner als oder gleich 35° ist.

5. Motorradreifen nach einem der vorhergehenden Ansprüche, wobei die Schräge der ersten querverlaufenden Nuten (21) in den Seitenbereichen kleiner als oder gleich 45° ist.

6. Motorradreifen nach einem der vorhergehenden Ansprüche, wobei ein erstes Ende (21e) der ersten querverlaufenden Nuten (21) sich nahe der Äquatorialebene (X-X) des Reifens.

7. Motorradreifen nach einem der vorhergehenden Ansprüche, wobei die ersten querverlaufenden Nuten (21) einen ersten Abschnitt (21a') in unmittelbarer Nähe zu der Äquatorialebene des Reifens (X-X) und einen zweiten Abschnitt (21a") distal von der Äquatorialebene des Reifens (X-X) in dem Zentralbereich (M) des Laufflächenrings (8) umfassen, und wobei der erste Abschnitt (21a') eine größere Schräge aufweist als der zweite Abschnitt (21a").

8. Motorradreifen nach einem der vorhergehenden Ansprüche, wobei die ersten querverlaufenden Nuten (21) einen dritten Abschnitt (21b') in unmittelbarer Nähe zu der Äquatorialebene des Reifens (X-X) und einen vierten Abschnitt (21b") distal von der Äquatorialebene des Reifens (X-X) in den Seitenbereichen (S) des Laufflächenrings (8) umfassen, und wobei der dritte Abschnitt (21b') eine größere Schräge aufweist als der vierte Abschnitt (21b").

9. Motorradreifen nach einem der vorhergehenden Ansprüche, wobei die ersten querverlaufenden Nuten (21) eine Tiefe in dem Zentralbereich (M) aufweisen, die größer ist als eine Tiefe in den Seitenbereichen (S).

10. Motorradreifen nach einem der vorhergehenden Ansprüche, wobei die ersten querverlaufenden Nuten (21) eine Breite in den Seitenbereichen (S) aufweisen, die größer ist als eine Tiefe in dem Zentralbereich (M).

11. Motorradreifen nach einem der vorhergehenden Ansprüche, wobei jede der zweiten querverlaufenden Nuten (22) zumindest einen dritten Abschnitt (22c) mit einer Schräge größer als 40° umfasst.

12. Motorradreifen nach einem der vorhergehenden Ansprüche, wobei der erste Abschnitt und/oder der dritte Abschnitt (22a, 22c) der zweiten querverlaufenden Nuten (22) eine Schräge größer als 50° aufweist.

13. Motorradreifen nach Anspruch 11, wobei der erste Abschnitt (22a) und der dritte Abschnitt (22c) der zweiten querverlaufenden Nuten (22) unterschiedliche Schrägen aufweisen.

14. Motorradreifen nach einem der vorhergehenden Ansprüche, wobei der erste Abschnitt (22b) der zweiten querverlaufenden Nuten (22) eine Schräge kleiner als oder gleich 35° aufweist.

15. Motorradreifen nach Anspruch 1 oder 11, wobei zumindest einer von erstem und drittem Abschnitt (22a, 22c) der zweiten querverlaufenden Nuten (22) eine Schräge größer als 90° aufweist.

16. Motorradreifen nach Anspruch 15, wobei der Motorradreifen dazu geeignet ist, an einem Vorderrad eines Motorrads montiert zu werden.

17. Motorradreifen nach einem der vorhergehenden Ansprüche, wobei der zweite Abschnitt (22b) der zweiten querverlaufenden Nuten (22) mit zumindest einem ersten Abschnitt (22a) der zweiten querverlaufenden Nuten (22) einen Winkel kleiner als oder gleich 90° bildet.

18. Motorradreifen nach Anspruch 17, wobei der zweite Abschnitt (22b) der zweiten querverlaufenden Nuten (22) mit dem zumindest einen ersten Abschnitt (22a) der zweiten querverlaufenden Nuten (22) einen Winkel größer als oder gleich 50° bildet.

## Revendications

1. Pneu pour motocycle (1) comprenant une bande de roulement (8) comprenant une région centrale (M) et deux régions latérales (S), ladite région centrale (M) s'étendant à cheval sur un plan équatorial (X-X) dudit pneu, lesdites régions latérales (S) s'étendant latéralement à ladite région centrale (M), ladite bande de roulement (8) comprenant en outre une sculpture de bande de roulement comportant :
- une pluralité de premières rainures transversales (21) s'étendant à partir de ladite région centrale (M) jusqu'aux dites régions latérales (S), où une inclinaison desdites premières rainures transversales (21) dans ladite région centrale (M) est inférieure ou égale à 40° et une inclinaison desdites premières rainures transversales (21) dans lesdites régions latérales (S) est supérieure à 40° ;
- une pluralité de deuxièmes rainures transversales (22) s'étendant à l'intérieur desdites régions latérales (S), chacune desdites deuxièmes rainures transversales (22) comprenant au moins une première partie (22a) ayant une inclinaison supérieure à 40° et au moins une deuxième partie (22b) ayant une inclinaison inférieure ou égale à 40° ; et où
- lesdites deuxièmes rainures transversales (22) sont essentiellement en forme de "U" ;
- au moins ladite première partie (22a) et ladite deuxième partie (22b) desdites deuxièmes rainures transversales (22) se croisent de manière à former au moins un sommet (23, 24) ;
- ledit au moins un sommet (23, 24) fait face au plan équatorial du pneu (X-X) ;
- ledit pneu étant **caractérisé en ce que** le rapport moyen vide/caoutchouc est le plus élevé dans une partie intermédiaire des régions latérales (S) de la bande de roulement, alors qu'il est minimal dans la région centrale (M) de la bande de roulement (8).

2. Pneu pour motocycle selon la revendication 1, dans lequel la région centrale (M) s'étend sur une largeur inférieure ou égale à 40% de l'extension latérale de la bande de roulement (8).

3. Pneu pour motocycle selon la revendication 1 ou 2, dans lequel la sculpture de bande de roulement ne comprend pas de rainures s'étendant uniquement suivant une direction essentiellement longitudinale.

4. Pneu pour motocycle selon l'une quelconque des revendications précédentes, dans lequel l'inclinaison desdites premières rainures transversales (21) dans ladite région centrale (M) est inférieure ou égale à 35°.

5. Pneu pour motocycle selon l'une quelconque des revendications précédentes, dans lequel l'inclinaison desdites premières rainures transversales (21) dans lesdites régions latérales est supérieure à 45°.

6. Pneu pour motocycle selon l'une quelconque des revendications précédentes, dans lequel une première extrémité (21e) desdites premières rainures transversales (21) est située à proximité du plan équatorial (X-X) du pneu.

7. Pneu pour motocycle selon l'une quelconque des revendications précédentes, dans lequel lesdites premières rainures transversales (21) comprennent une première partie (21a') proximale au plan équatorial du pneu (X-X) et une deuxième partie (21a") distale par rapport au plan équatorial du pneu (X-X) dans ladite région centrale (M) de la bande de roulement (8), et dans lequel ladite première partie (21a') a une inclinaison supérieure à celle de ladite deuxième partie (21a").

8. Pneu pour motocycle selon l'une quelconque des revendications précédentes, dans lequel lesdites premières rainures transversales (21) comprennent une troisième partie (21b') proximale au plan équatorial du pneu (X-X) et une quatrième partie (21b") distale par rapport au plan équatorial du pneu (X-X) dans lesdites régions latérales (S) de la bande de roulement (8), et dans lequel ladite troisième partie (21b') a une inclinaison supérieure à celle de ladite quatrième partie (21b").

9. Pneu pour motocycle selon l'une quelconque des revendications précédentes, dans lequel lesdites premières rainures transversales (21) ont une profondeur dans ladite région centrale (M) qui est supérieure à une profondeur dans lesdites régions latérales (S).

10. Pneu pour motocycle selon l'une quelconque des revendications précédentes, dans lequel lesdites premières rainures transversales (21) ont une largeur dans lesdites régions latérales (S) qui est supérieure à une largeur dans ladite région centrale (M).

11. Pneu pour motocycle selon l'une quelconque des revendications précédentes, dans lequel chacune desdites deuxièmes rainures transversales (22) comprend au moins une troisième partie (22c) ayant une inclinaison supérieure à 40°.

12. Pneu pour motocycle selon l'une quelconque des revendications précédentes, dans lequel ladite première partie et/ou ladite troisième partie (22a, 22c) desdites deuxièmes rainures transversales (22) a/ont une inclinaison supérieure à 50°.

13. Pneu pour motocycle selon la revendication 11, dans lequel ladite première partie (22a) et ladite troisième partie (22c) desdites deuxièmes rainures transversales (22) ont des inclinaisons différentes.

14. Pneu pour motocycle selon l'une quelconque des revendications précédentes, dans lequel ladite deuxième partie (22b) desdites deuxièmes rainures transversales (22) a une inclinaison inférieure ou égale à 35°.

15. Pneu pour motocycle selon la revendication 1 ou 11, dans lequel au moins l'une parmi lesdites première et troisième parties (22a, 22c) desdites deuxièmes rainures transversales (22) a une inclinaison supérieure à 90°.

16. Pneu pour motocycle selon la revendication 15, dans lequel ledit pneu pour motocycle est adapté pour être ajusté à une roue avant d'un motocycle.

17. Pneu pour motocycle selon l'une quelconque des revendications précédentes, dans lequel ladite deuxième partie (22b) desdites deuxièmes rainures transversales (22) forme avec ladite au moins une première partie (22a) desdites deuxièmes rainures transversales (22) un angle inférieur ou égal à 90°.

18. Pneu pour motocycle selon la revendication 17, dans lequel ladite deuxième partie (22b) desdites deuxièmes rainures transversales (22) forme avec ladite au moins une première partie (22a) desdites deuxièmes rainures transversales (22) un angle supérieur ou égal à 50°.
